Europäisches Patentamt

European Patent Office

Office européen des brevets

(19)

(11) Publication number: **0 137 381**
**B1**

## (12) EUROPEAN PATENT SPECIFICATION

(45) Date of publication of patent specification: 25.05.88

(51) Int. Cl.⁴: **G 03 B 27/62**

(21) Application number: **84111250.1**

(22) Date of filing: **20.09.84**

(54) **Paper feeding device.**

(30) Priority: **28.09.83 JP 181618/83**

(43) Date of publication of application:
**17.04.85 Bulletin 85/16**

(45) Publication of the grant of the patent:
**25.05.88 Bulletin 88/21**

(84) Designated Contracting States:
**DE FR GB NL**

(56) References cited:
**EP-A-0 017 234**
**DE-A-3 041 971**
**RESEARCH DISCLOSURE, no. 222, October 1982, pages 331-334, Havant, Hampshire, GB; OVERMEER: "Feeder for automatically feeding documents"**
**IBM TECHNICAL DISCLOSURE BULLETIN, vol. 22, no. 12, May 1980, pages 5272-5275, New York, US; J.L. COCHRAN et al.: "Paper feed process variations compensated"**

(73) Proprietor: **MITA INDUSTRIAL CO. LTD.**
**2-28, 1-chome, Tamatsukuri Higashi-ku**
**Osaka 540 (JP)**

(72) Inventor: **Miyoshi, Yoshitake**
**Court A-404 2-207-1, Higashi-ikoma**
**Ikoma-city Nara-Prefecture (JP)**

(74) Representative: **Patentanwälte TER MEER - MÜLLER - STEINMEISTER**
**Mauerkircherstrasse 45**
**D-8000 München 80 (DE)**

(56) References cited:
**IBM TECHNICAL DISCLOSURE BULLETIN, vol. 18, no. 10, March 1976, page 3151, New York, US; D.K. GIBSON: "Separator/restraint paper feed system"**

**PATENTS ABSTRACTS OF JAPAN, vol. 7, no. 98 (M-210)1243r, 26th April 1983; JP - A - 58 22 230 (CANON K.K.) 09-02-1983**

Courier Press, Leamington Spa, England.

## Description

The invention refers to a paper feeding device comprising conveyor rollers including top rollers and bottom rollers which rotate in the same direction and are disposed on two shafts individually so as to be alternately positioned, and timing rollers provided on the downstream side of the conveyor rollers wherein the center-to-center distance between said two shafts is adapted to be somewhat smaller than the sum of radii of the top and the bottom rollers.

A device of this kind is known in the prior art, cf. e.g. EP—A—17 234, claim 1 and figure 2. According to this document, the bottom roller is engaging a circumferential groove of the top roller.

In copying machines having a so-called automatic document feeder (ADF) which automatically feeds the sheet of the original to the original receiving table, two or more sheets of the originals are occasionally fed at a time or the sheet of paper is impaired while being fed, thereby efficient copying being difficult.

It is the object of the present invention to prevent wrong performance of the automatic document feeder, as feeding a number of sheets of the originals at a time or impairment of paper sheets of the originals.

According to the invention, a copying machine of the above kind is characterized in that a recess is provided on each of the said top rollers so that the recesses face the circumference of the bottom rollers when the leading edge of the sheet of paper conveyed to the side of timing rollers by said conveyor rollers abuts on the timing rollers, and a control device is provided to stop the top rollers when the recesses face the circumference of the bottom rollers.

The drawings show an embodiment of the present invention, wherein:

Fig. 1 is a side view of a main part of the automatic original feeding device to which the present invention is applied;

Fig. 2 is a schematical sectional side view of a paper feeding device;

Fig. 3 is a perspective view of main parts of feed rollers and of conveyor rollers;

Figs. 4 and 5 are views for illustrating a positional relation between two shafts for conveyor rollers;

Fig. 6 is a side view of a transmission mechanism;

Fig. 7 is a sectional view taken along the line X—O—Y in Fig. 6;

Figs. 8 and 9 are views for illustrating a performance of the device; and,

Fig. 10 is a view for illustrating the action of conveyor rollers.

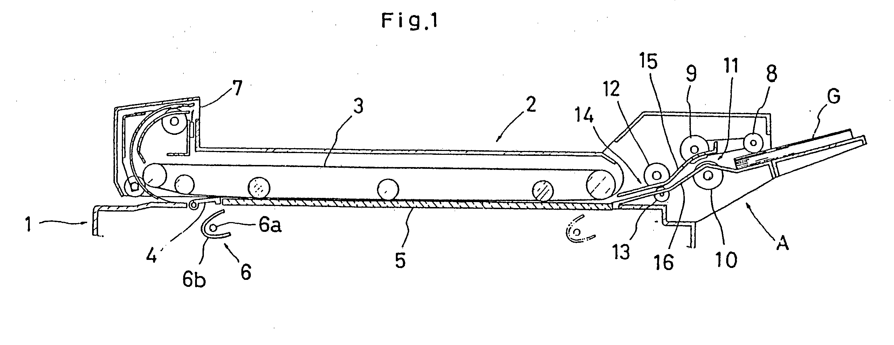

Fig. 1 shows a main part of a transferable optical system employing-type electrostatic photographic copying machine to which the present invention is applied at the automatic original feeding device thereof.

An original receiving table 2 is provided on the top of the copying machine; the original G fed into the original receiving table 2 by a paper feeding device A is further conveyed by the conveyor belt 3; the foremost end of the original is caught by the stopper 4; and, when the original is stopped and held at a fixed position on the contact glass 5, an optical system 6 (a lamp 6a and a reflector mirror 6b only are shown in the drawing) driven by driving means not shown in the drawing is moved parallelly with the contact glass from the left side in Fig. 1 shown by a solid line to the right side shown by a image line for casting light on the original G; and, upon completion of exposure of the original to light, the original G is released from stoppage effected by the stopper 4, and again conveyed toward the original take-out opening 7 by the conveyor belt 3 when the subsequent original is fed to the original receiving table 2 in the like manner.

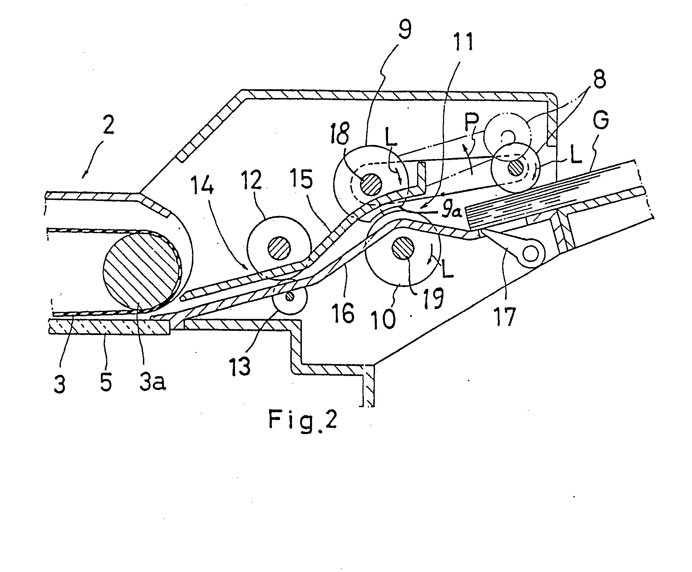

The abovesaid paper feeding device A, as shown in Fig. 2, is disposed on the upstream side of the original receiving table 2 and comprises a feed roller 8, conveyor rollers 11 disposed on the downstream side of the feed rollers 8 and including top rollers 9 and bottom ones 10, and timing rollers 14 disposed on the downstream side of the conveyor rollers 11 and including a driving roller 12 and a follower one 13. These rollers are arranged to operate while subjected to timing adjustment closely related to the abovesaid conveyor belt 3, stopper 4, and optical system 6. The detail of the operation will be described later.

Reference numerals 15, 16 and 17 indicate an upper guide, a lower guide which are provided in the path for conveying the original, and a sensor for detecting the original G, respectively.

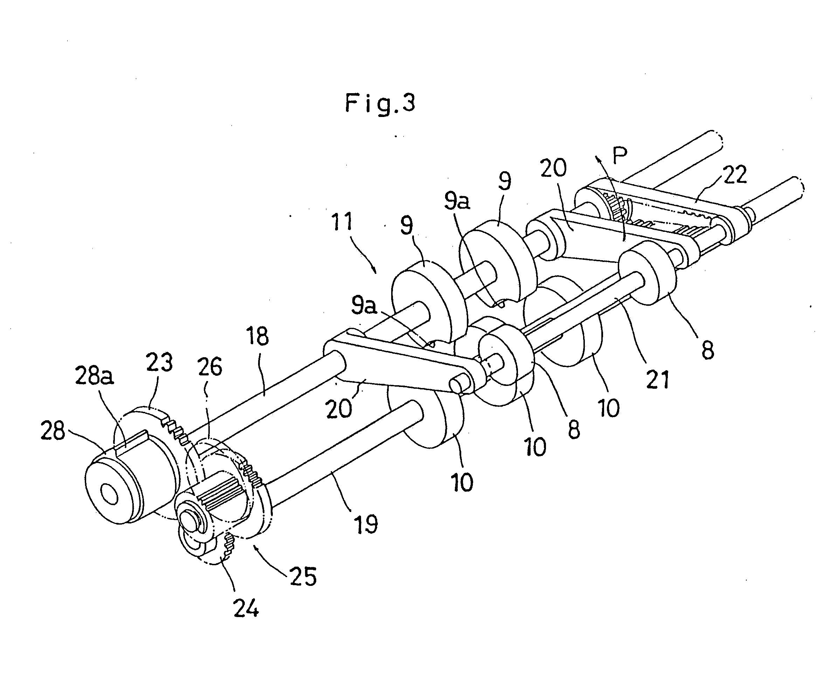

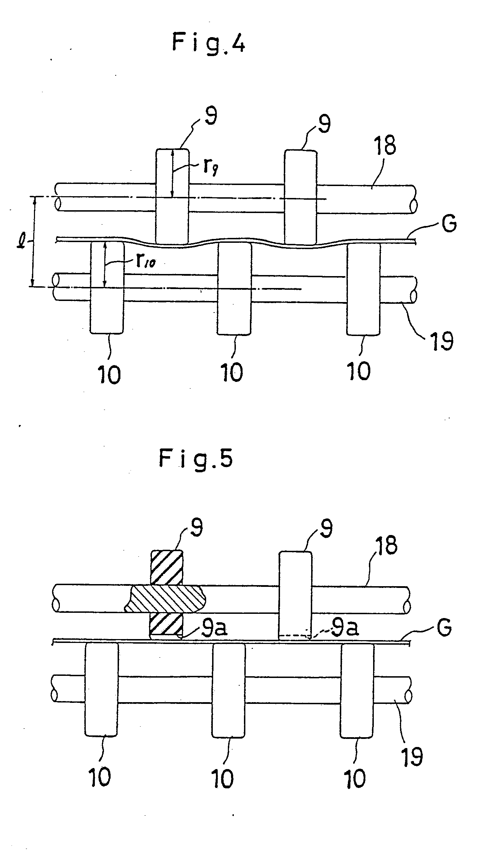

Fig. 3 shows an arrangement of feed rollers 8 and conveyor rollers 11, in which the top rollers 9 and the bottom ones 10 composing the conveyor rollers 11 are made of rubber and individually fitted onto two shafts 18 and 19 to rotate in the same direction. As shown in Fig. 4, the top rollers 9 and the bottom ones 10 are arranged to be positionally alternate (in zigzag pattern), and center-to-center distance $l$ between two shafts 18 and 19 is fixed as $l < r_9 + r_{10}$, where radii of the top roller and the bottom one are $r_9$ and $r_{10}$, respectively, and also as $r_9 + r_{10} - l \approx 0.3 \infty 0.8$ mm, though the latter formula differs according to the intervals at which the top roller 9 and the bottom one 10 are positioned on the shafts. Therefore, the original G passing between the top rollers 9 and the bottom ones 10 is usually somewhat curved like a wave as shown in Fig. 4 and conveyed toward the downstream side while undergoing a force generated due to the difference in rotational speed or in kind of materials of the top rollers 9 and the bottom ones 10. On the circumference of the top roller 9, a recess 9a is provided so that the original G is rarely subjected to the action of forces exerted by the top roller 9 and the bottom one 10 when the recess 9a of the top roller 9 is in a position to face the circumference of the bottom roller 10 as disclosed in Fig. 5.

The feed rollers 8 are fitted on a shaft 21 and the shaft 21 is connected pivotally to the arms 20 which are fitted rotatably on the other shaft 18. The feed rollers 8 are rotated through transmission means 22 such as chain or belt simultaneously with the top roller 9 and in the same direction.

When a sheet of original G is conveyed to the downstream side by the feed rollers 8, subsequent sheet of original must be fed after a lapse of a certain time, which is performed usually in such manner as follows:

There are two optional methods such as providing a one-direction clutch for the feed rollers 8 or as turning the arm 20 upward (in the direction P) when the foremost end of the fed original G reaches the downstream point slightly distant from the conveyor roller 11 and, after a lapse of a certain time, returning the arm 20 to the initial position thereof for disconnection of the feed roller from the original G.

The abovesaid shafts 18 and 19 are individually provided with gears 23 and 24 at one end of each thereof, with which a transmission gear 25 meshes, and this transmission gear 25 further meshes with the driving gear 26 driven by a motor (not shown).

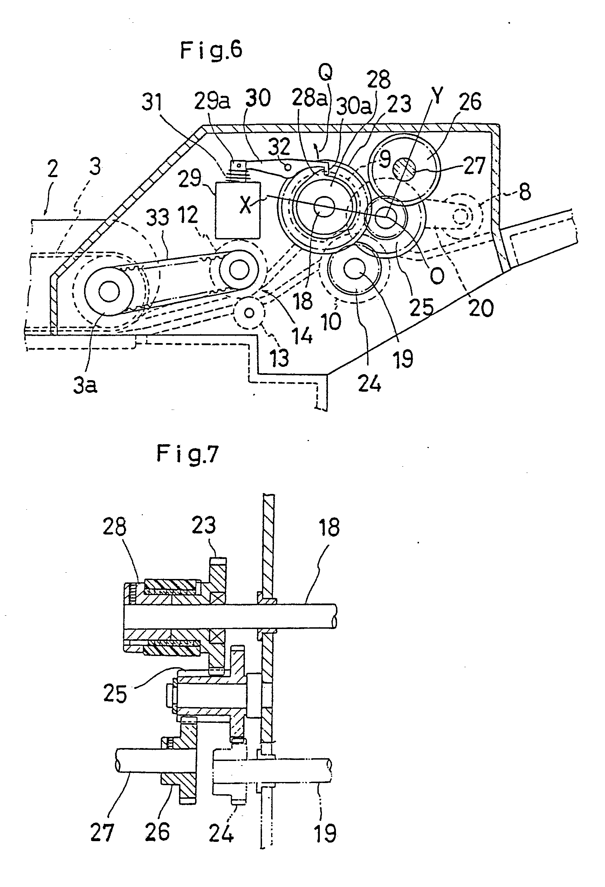

Fig. 6 and Fig. 7 are views showing a part of power transmission mechanism and, in particular, Fig. 7 is a sectional view taken along the line X—O—Y in Fig. 6.

Reference numerals 27, 28 and 28a indicate a driving shaft for transmitting revolutions of the motor (not shown), a feed clutch fixed to the shaft 18, and a detent of the above clutch. The numeral 30 indicates a catching piece connected to the movable core 29a of the solenoid 29 at one end and, when the solenoid is excited, turns in the direction Q around a fulcrum 32 in opposition to the force of a spring 31, the catching end 30a thereof engaging with the abovesaid clutch detent 28a. When one piece of detent 28a is provided, the feed clutch 28 is actuated by every revolution of the shaft 18.

The driving roller 12 of the timing rollers 14 is connected to the driving roller 3a that drives the conveyor belt 3 in the original receiving table 2, through the transmission mechanism 33 as chain or belt and a clutch not shown in the drawing.

With reference to Figs. 2, 3, 8 and 9, performance of the paper feeding device constructed as described above will be described.

First, the original G is set as predetermined. With turning the actuating switch ON, the driving gear 26 is driven by the motor and gear 24, in other words, the bottom roller 10 is rotated through the gear 25 in the direction L. A gear 23, too, is rotated but the solenoid is not yet excited, when the catching end 30a of the catching piece 30 engages with the clutch detent 28a of the feed clutch 28 to prevent the rotation of the shaft 18, that is, the top roller 9, whereby the recess 9a on the top roller 9 faces the circumference of the bottom roller 10. Upon turning the paper feed switch ON, the feed roller 8 shown by the imaginary line in Fig. 2 is turned to a position indicated by the continuous line, that is, a position at which the feed roller 8 comes into contact with the original G due to gravity, by a cam not shown in the drawing, and the solenoid 29 is excited, whereby engagement of the catching end 30a of the catching piece 30 with the clutch detent 28a is released, driving power of the gear 23 is transmitted to the shaft 18, and, accordingly, the top roller 9 and the feed roller 8 are turned in the direction L. At this time, the driving roller 3a contained in the original receiving table 2 is at a standstill and thus the conveyor belt 3 as well as the timing rollers 14 is also at a standstill.

The first sheet of the original $G_1$ is conveyed by the rotation of the feed roller 8 toward the downstream side. At this time, the second sheet $G_2$ occasionally moves together with the first sheet but cannot move further because the foremost end thereof abuts on the bottom roller 10 which rotates in the direction L.

After the first original $G_1$ is clamped between the circumference of the top roller 9 and that of the bottom roller 10, the feed roller 8 is kept again in a position apart from the original G by the cam as shown by the imaginary line in Fig. 2.

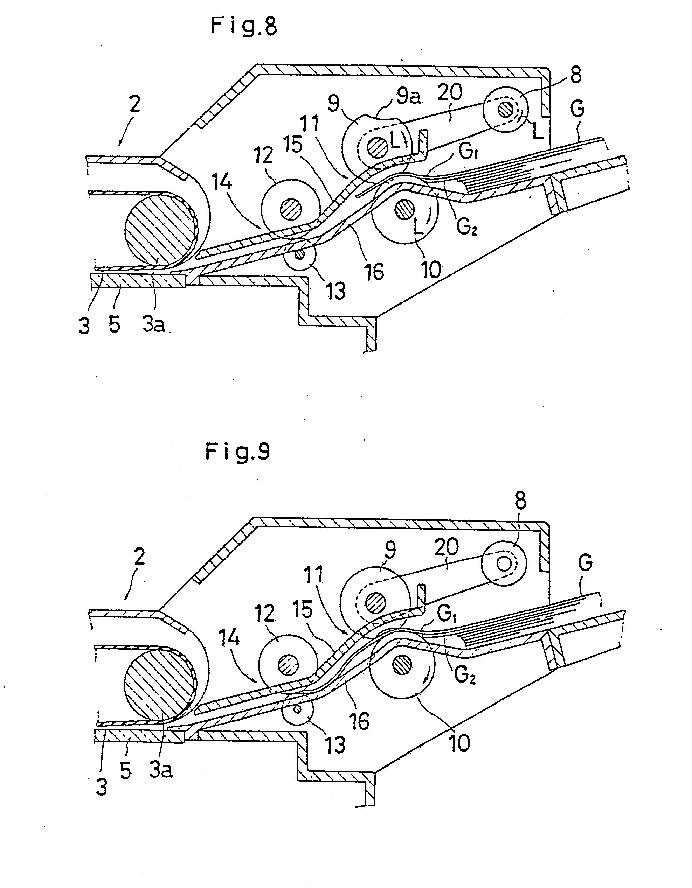

The first sheet $G_1$ of the original clamped between the circumference of the top roller 9 and that of the bottom one 10 is conveyed further to the downstream side and, as shown in Fig. 9, just when or after a while the foremost end of the original abuts on the timing rollers 14, the clutch detent 28a of the feed clutch 28 that has been revolving together with the top roller 9 again engages with the catching end 30a of the catching piece 30 lying in an engaging position due to de-excitation of the solenoid 29 for releasing connection between the shaft 18 and the gear 23.

Thus, the top roller 9 and the feed roller 8 stop, when the recess 9a of the top roller 9 is in a position facing the circumference of the bottom roller 10 and, therefore, clamping force of the conveyor roller 11 is hardly exerted on the original $G_1$.

In this case, when the top roller 9 is adapted to stop after a while the foremost end of the original $G_1$ abuts on the timing rollers 14, the foremost end of the original $G_1$ is positionally adjusted to be straight even though touching the timing roller 14 while skewing.

On the other hand, when the foremost end of the original $G_1$ abuts on the timing rollers 14 or is in a position close thereto, the position of the original is detected by the position sensor (not shown) and, in response to a signal emitted from the sensor, the driving roller 3a in the original receiving table 2 is driven by the driving source not shown, whereby the timing rollers 14 as well as the conveyor belt 3 is actuated.

The foremost end of the original $G_1$ is conveyed to the downstream side while being clamped by the timing rollers 14, however, since the feed rollers 8 are out of contact with the original as described above and none of the clamping force of the conveyor rollers 11 is exerted on the original $G_1$, the sheet of the original is not impaired and surely conveyed even though the conveying force of the conveyor belt 3 and timing rollers 14 is weak.

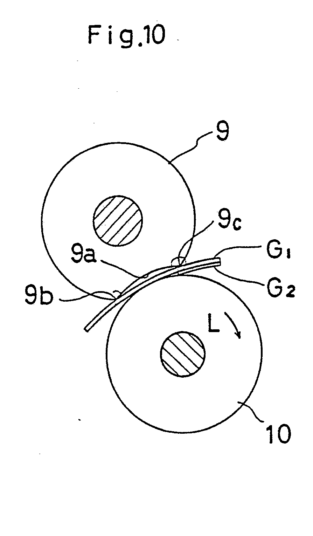

Further, upon reference to Fig. 10 showing conveyor rollers 11, the original $G_1$ is slightly pressed to the bottom roller periphery by its own weight and border parts 9b and 9c between the top roller circumference and the recess 9a and, therefore, the second original $G_2$ is returned, even if conveyed together with the first original $G_1$, by the rotation of the bottom rollers 10 in the direction L so as to be advanced no more.

When the original $G_1$ entering the original receiving table 2 is stopped at a fixed position on the contact glass 5 after subjected to control by the stopper 4 at the foremost end thereof and the stop of the conveyor belt 3, the optical system 6 casts light on the original $G_1$ and, upon completion of exposure of the original to light, the stopper 4 releases the foremost end of the original from control.

With the release of control effected by the stopper 4, the original $G_1$ is conveyed to the original take-out opening 7 by the conveyor belt 3 and, on the other hand, the feed rollers 8 abut on the original $G_2$ in response to a feed starting signal, the top rollers 9 and the feed rollers 8 start rotating for adapting the second original $G_2$ to abut on the timing rollers 14 that have been stopped by the abovesaid clutch not shown, and the conveyor belt 3 and the timing rollers 14 are rotated for feeding the original into the original receiving table 2.

As has been described in detail, since the present invention provides a structure comprising: conveyor rollers including top rollers and bottom ones which rotate in the same direction, and disposed on two shafts individually so as to be alternately positioned; and timing rollers provided on the downstream side of the conveyor rollers; wherein a center-to-center distance between the abovesaid two shafts is adapted to be somewhat smaller than the sum of radii of the top and the bottom rollers, a recess is provided on each of the abovesaid top rollers so that the recess faces the circumference of the bottom roller when the tip of the sheet of paper as the original conveyed to the side of timing rollers by the abovesaid conveyor rollers abuts on the timing rollers; wrong performance as feeding of a number of sheets of originals at a time and impairment of the sheet of originals or the like are surely prevented.

It is a matter of course that the application of the present invention to a feeding device for feeding copying paper on the copying machine enables similar effects to those obtained as described above.

## Claims

1. A paper feeding device comprising conveyor rollers including top rollers (9) and bottom rollers (10) which rotate in the same direction (L) and are disposed on two shafts (18, 19) individually so as to be alternately positioned, and timing rollers (12, 13) provided on the downstream side of the conveyor rollers wherein the center-to-center distance between said two shafts (18, 19) is adapted to be somewhat smaller than the sum of radii of the top and the bottom rollers (9, 10) characterized in that a recess (9a) is provided on each of the said top rollers (9) so that the recesses face the circumference of the bottom rollers (10) when the leading edge of the sheet of paper conveyed to the side of timing rollers (12, 13) by said conveyor rollers abuts on the timing rollers, and a control device is provided to stop the top rollers when the recesses (9a) face the circumference of the bottom rollers (10).

2. A paper feeding device as set forth in claim 1, characterized in that the top rollers (9) rotate to move in feeding direction adjacent the path of the paper while the bottom rollers (10) rotate to move against the feeding direction.

3. A paper feeding device as set forth in claim 2, characterized in that when the recesses (9a) of the top rollers (9) face the circumference of the bottom rollers (10), and the bottom rollers (10) rotate to put back the paper upstream, the paper is slightly pressed to the bottom roller periphery by its own weight and border parts (9b, 9c) between the top roller circumference and the recess.

4. A paper feeding device as set forth in one of claims 1 to 3, characterized by a stop mechanism (18, 28a, 30, 30a) to stop the top rollers (9) when the recesses (9a) face the circumference of the bottom rollers (10), said stop mechanism comprising a catching piece (30) controlled by a solenoid (19) and having a catching end (30a) engaging with a clutch detent (28a) of a feed clutch (28) provided on said shaft (18) of said top rollers (9).

5. Use of a paper feeding device as set forth in one of claims 1 to 4 for feeding the sheet of the original in a copying machine.

6. Use of a paper feeding device as set forth in one of claims 1 to 4 for feeding the sheet of copying paper in a copying machine.

## Patentansprüche

1. Blattzuführeinrichtung mit Förderrollen, die obere Rollen (9) und untere Rollen (10) umfassen, die sich in die selbe Richtung (L) drehen und einzeln und abwechselnd auf zwei Wellen (18, 19) angeordnet sind, und Zeittaktrollen (12, 13) auf der stromabwärtigen Seite der Förderrollen, wobei der Mittenabstand zwischen den beiden Wellen (18, 19) etwas geringer als die Summe der Radien der oberen und unteren Rollen (9, 10) ist, dadurch gekennzeichnet, daß eine Ausnehmung (9a) in allen oberen Rollen (9) vorgesehen ist, die den unteren Rollen (10) gegenüberliegt, wenn der vorauslaufende Rand eines Blattes Papier, das in Richtung der Zeittaktrollen (12, 13) durch die Förderrollen gefördert wird, die Zeittaktrollen berührt, und daß eine Steuereinrichtung vorgesehen ist, die die oberen Rollen anhält, wenn die Ausnehmungen (9a) dem Umfang der unteren Rollen (10) gegenüberliegen.

2. Blattzuführeinrichtung nach Anspruch 1, dadurch gekennzeichnet, daß die oberen Rollen (9) angrenzend an die Bahn des Blattes in Förderrichtung gedreht werden, während die unteren Rollen (10) entgegen der Förderrichtung gedreht werden.

3. Blattzuführeinrichtung nach Anspruch 2, dadurch gekennzeichnet, daß, wenn die Ausnehmungen (9a) der oberen Rollen (9) dem Umfang der unteren Rollen (10) gegenüberliegen und die unteren Rollen (10) gedreht werden zur Rückführrung des Blattes zur stromaufwärtigen Seite, das Blatt leicht durch sein eigenes Gewicht und Randbereiche (9b, 9c) zwischen dem Umfang der oberen Rollen und deren Ausnehmung gegen den Umfang der unteren Rollen gedrückt wird.

4. Blattzuführeinrichtung nach einem der Ansprüche 1 bis 3, gekennzeichnet durch einen Haltemechanismus (18, 28a, 30, 30a) zum Anhalten der oberen Rollen (9), wenn die Ausnehmungen (9a) dem Umfang der unteren Rollen (10) gegenüberliegen, welcher Haltemechanismus eine Fangklinke (30) aufweist, die durch einen Elektromagneten (19) gesteuert wird und ein Fang-Ende (30a) aufweist, das mit einem Kupplungsschlitz (28a) einer Förderkupplung (28) zusammenwirkt, die sich auf der Welle (18) der oberen Rollen (9) befindet.

5. Verwendung einer Blattzuführeinrichtung gemäß einem der Ansprüche 1 bis 4 zum Fördern eines Vorlage-Blattes in einer Kopiervorrichtung.

6. Verwendung einer Blattzuführeinrichtung nach einem der Ansprüche 1 bis 4 zum Fördern eines Kopierpapier-Blattes in einer Kopiermaschine.

**Revendications**

1. Dispositif d'alimentation en papier comprenant des galets de transport comportant des galets supérieures (9) et des galets inférieurs (10) qui tournent dans le même sens (L) et sont disposés sur deux arbres (18, 19) de manière individuelle afin d'être dans des positions alternées, et des galets de synchronisation (12, 13) présents en aval des galets de transport, l'entr'axe entre les deux arbres (18, 19) étant conçu pour être légèrement inférieur à la somme des rayons des galets supérieurs et inférieurs (9, 10), caractérisé en ce qu'un évidement (9a) est réalisé sur chacun desdits galets supérieurs (9) de façon que les évidements soient tournés vers la circonférence des galets inférieurs (10) quand le bord antérieur de la feuille de papier acheminée jusqu'au bord des galets de synchronisation (12, 13) par lesdits galets de transport vient buter sur les galets de synchronisation, et un dispositif de commande est présent pour arrêter les galets supérieurs quand les évidements (9a) sont tournés vers la circonférence des galets inférieurs (10).

2. Dispositif d'alimentation en papier selon la revendication 1, caractérisé en ce que les galets supérieures (9) tournent pour se mouvoir dans le sens de l'alimentation de manière adjacente au parcours du papier pendant que les galets inférieurs (10) tournent pour se mouvoir à l'opposé du sens de l'alimentation.

3. Dispositif d'alimentation en papier selon la revendication 2, caractérisé en ce que, lorsque les évidements (9a) des galets supérieurs (9) font face à la circonférence des galets inférieurs (10) et que les galets inférieurs (10) tournent pour repousser le papier vers l'amont, le papier est légèrement appuyé contre la périphérie du galet inférieur de par son propre poids et grâce à des bords (9b, 9c) entre la circonférence du galet supérieur et l'évidement.

4. Dispositif d'alimentation en papier selon l'une quelconque des revendications 1 à 3, caractérisé par un mécanisme d'arrêt (18, 28a, 30, 30a) pour arrêter les galets supérieurs (9) quand les évidements (9a) sont tournés vers la circonférence des galets inférieurs, ledit mécanisme d'arrêt comprenant une pièce d'immobilisation (30) commandée par un électro-aimant (19) et ayant une extrémité d'immobilisation (30a) qui s'enclenche avec un ergot (28a) d'un embrayage d'alimentation (28) présent sur l'arbre (18) desdits galets supérieurs (9).

5. Utilisation d'un dispositif d'alimentation en papier selon l'une quelconque des revendications 1 à 4 pour faire avancer la feuille de l'original dans une photocopieuse.

6. Utilisation d'un dispositif d'alimentation en papier selon l'une quelconque des revendications 1 à 4 pour faire avancer la feuille de papier de tirage dans une photocopieuse.

**Fig.1**

Fig.2

# Fig.3

# Fig.4

# Fig.5

0 137 381

## Fig.6

## Fig.7

5

**Fig.8**

**Fig.9**

## Fig.10